# EUROPEAN PATENT APPLICATION

(11) **EP 4 539 552 A1**
(43) Date of publication of application: **16.04.2025**
(21) Application number: 22945166.1
(22) Date of filing: 06.06.2022
(51) Int. Cl.: H04W 52/02

(54) **TERMINAL STATE SWITCHING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: FU, Ting, Beijing 100085 (CN); LI, Yuanyuan, Beijing 100085 (CN); LIU, Wei, Beijing 100085 (CN)
(74) Representative: Dehns Germany Partnerschaft mbB
(86) International application number: PCT/CN2022/097221
(87) International publication number: WO 2023/236016

(57) **Abstract**

Provided in the embodiments of the present disclosure are a terminal state switching method and apparatus, a communication device, and a storage medium. The terminal state switching method, which is executed by a terminal, may comprise: after detecting that a terminal ends a first state, monitoring a low-power wake-up signal (LP-WUS), wherein the LP-WUS is used for waking up the terminal to enter a second state for monitoring a physical downlink control channel (PDCCH) and/or a physical downlink shared channel (PDSCH).

## Description

### TECHNICAL FIELD

The present disclosure relates to the technical field of wireless communication but is not limited to the technical field of wireless communication, and in particular, to a terminal state switching method and apparatus, communication device and storage medium.

### BACKGROUND

The eXtended Reality (XR) service is one of the service types to be supported by mobile communication systems. The XR service includes: Augment Reality (AR), Virtual Reality (VR) or cloud services such as Cloud gaming, etc.

The typical characteristic of the XR service is: it is a service with a fixed frame rate, that is, there is a fixed period for the service to arrive at the user equipment (UE), but there will be an additional delay jitter (Jitter) on the fixed period, resulting in that the data service actually arrives at UE in advance or later.

In addition, terminals (or UEs) also have different states, and UEs in different states respond to the service at different rates.

### SUMMARY

Embodiments of the present disclosure provide a terminal state switching method and apparatus, a communication device, and a storage medium.

The first aspect of the embodiments of the present disclosure provides a terminal state switching method, which is performed by a terminal. The method includes:
detecting that the terminal ends a first state, and monitoring a low power wake up signal (LP-WUS);
where the LP-WUS is used to wake up the terminal to enter a second state of monitoring a physical downlink control channel (PDCCH) and/or a physical downlink shared channel (PDSCH).

The second aspect of the embodiments of the present disclosure provides a terminal state control method, which is performed by a base station. The method includes:
in response to that a terminal ends a first state, determining whether service data of the terminal has arrived; and
detecting arrival of service data of the terminal, and sending a low power wake up signal (LP-WUS);
where the LP-WUS is used to wake up the terminal to enter a second state of monitoring a physical downlink control channel (PDCCH) and/or a physical downlink shared channel (PDSCH); and
the service data is used to be sent to the terminal after the terminal enters the second state.

The third aspect of the embodiments of the present disclosure provides a terminal state switching apparatus. The apparatus includes:
a monitoring module, configured to detect that a terminal ends a first state, and monitor a low power wake up signal (LP-WUS);
where the LP-WUS is used to wake up the terminal to enter a second state of monitoring a physical downlink control channel (PDCCH) and/or a physical downlink shared channel (PDSCH).

The fourth aspect of the embodiments of the present disclosure provides a terminal state control apparatus, which is performed by a base station. The apparatus includes:
a determining module, configured to, in response to that a terminal ends a first state, determine whether service data of the terminal has arrived; and
a sending module, configured to detect arrival of the service data of the terminal, and send a low power wake up signal (LP-WUS);
where the LP-WUS is used to wake up the terminal to enter a second state of monitoring a physical downlink control channel (PDCCH) and/or a physical downlink shared channel (PDSCH); and
the service data is used to be sent to the terminal after the terminal enters the second state.

The fifth aspect of the embodiments of the present disclosure provides a communication device, including a processor, a transceiver, a memory, and an executable program stored in the memory and capable of being run by the processor, where when the processor runs the executable program, the terminal state switching method provided by the first aspect or the second aspect is executed.

The tenth aspect of the embodiments of the present disclosure provides a computer storage medium that stores an executable program; after the executable program is executed by a processor, the terminal state switching method provided by the first aspect or the second aspect can be implemented.

By the technical solutions provided by the embodiments of the present disclosure, in the embodiments of the present disclosure, if it is detected that the terminal ends the first state, the terminal does not directly enter the high power consumption state of monitoring PDCCH and/or PDSCH, but enters the state of monitoring LP-WUS. In this way, if the network device side does not need to wake up the terminal to monitor PDCCH and/or PDSCH, or if the LP-WUS is not monitored by the terminal, the terminal will not enter the state of monitoring PDCCH and/or PDSCH, thereby saving power consumption of the terminal and prolonging the standby time of the terminal. Moreover, the terminal enters the LP-WUS state after ending the first state, the dormancy degree of the terminal is shallower compared to the first state. In this way, when information is exchanged between the network device and the terminal, the processor (for example, CPU or MCU), etc. of the terminal can be woken up in time and communicate with the network device, thus taking into account the communication efficiency.

It should be understood that the above general description and the following detailed description are only exemplary and explanatory, and do not limit the embodiments of the present disclosure.

### BRIEF DESCRIPTION OF THE DRAWINGS

The accompanying drawings, which are incorporated in and constitute a part of this specification, illustrate the embodiments consistent with the present disclosure, and together with the specification, serve to explain the principles of the embodiments of the present disclosure.
FIG. 1 is a schematic structural diagram of a wireless communication system according to an exemplary embodiment;
FIG. 2 is a schematic flowchart of a terminal state switching method according to an exemplary embodiment;
FIG. 3 is a schematic flowchart of a terminal state switching method according to an exemplary embodiment;
FIG. 4 is a schematic flowchart of a terminal state switching method according to an exemplary embodiment;
FIG. 5 is a schematic flowchart of a terminal state switching method according to an exemplary embodiment;
FIG. 6 is a schematic flowchart of a terminal state switching method according to an exemplary embodiment;
FIG. 7 is a schematic structural diagram of a terminal state switching apparatus according to an exemplary embodiment;
FIG. 8 is a schematic structural diagram of a terminal state switching apparatus according to an exemplary embodiment;

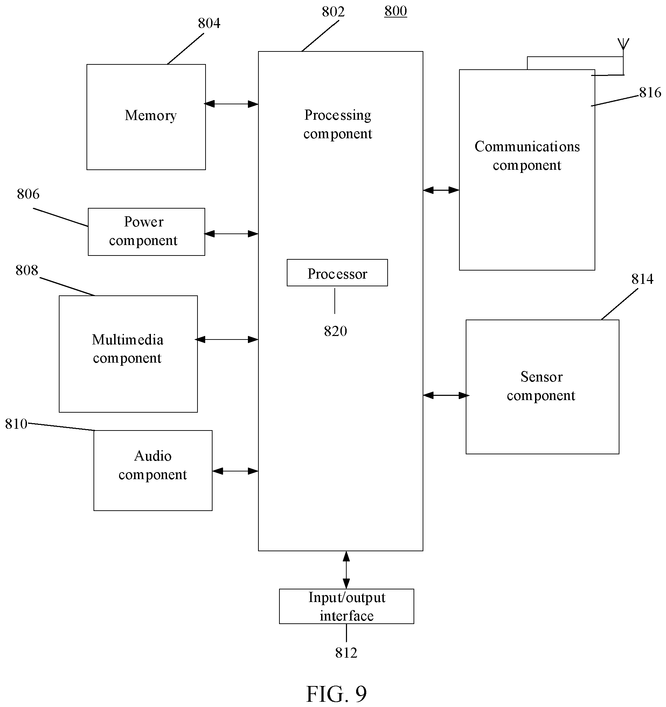

FIG. 9 is a schematic structural diagram of a UE according to an exemplary embodiment; and
FIG. 10 is a schematic structural diagram of a communication device according to an exemplary embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the embodiments of the present disclosure. Rather, they are merely examples of apparatus and methods consistent with some aspects of the embodiments of the present disclosure.

The terms used in the embodiments of the present disclosure are for the purpose of describing specific embodiments only and are not intended to limit the embodiments of the present disclosure. As used in the present disclosure, the singular forms "a/an," "said" and "the" are intended to include the plural forms as well, unless the context clearly dictates otherwise. It should also be understood that the term "and/or" as used herein refers to and includes any or all possible combinations of one or more of the associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, the word "if" as used herein may be interpreted as "when" or "upon" or "in response to determining."

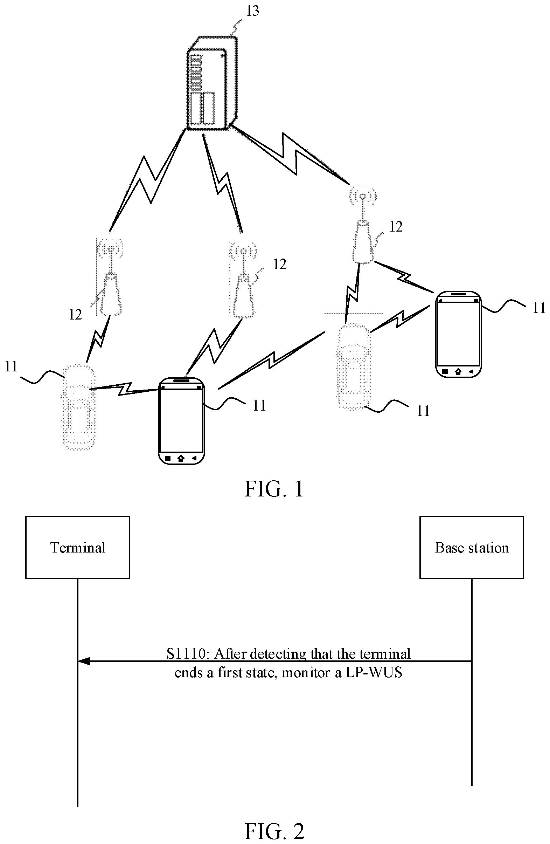

Referring to FIG. 1, a schematic structural diagram of a wireless communication system provided by an embodiment of the present disclosure is shown. As shown in FIG. 1, the wireless communication system is a communication system based on cellular mobile communication technology. The wireless communication system may include: several UEs 11 and several access devices 12.

The UE 11 may refer to a device that provides voice and/or data connectivity to the user. The UE 11 may communicate with one or more core networks via a Radio Access Network (RAN). The UE 11 may be an Internet of Things UE, such as a sensor device, a mobile phone (or "cellular" phone) and a computer with an Internet of Things UE. For example, it may be a fixed, portable, pocket-sized, handheld, computer-built-in or vehicle-mounted apparatus, such as a station (STA), a subscriber unit, a subscriber station, a mobile station, a mobile, a remote station, an access point, a remote UE (remote terminal), an access UE (access terminal), a user apparatus (user terminal), a user agent, a user device, or a user equipment (UE). Alternatively, the UE 11 may be a device of an unmanned aerial vehicle. Alternatively, the UE 11 may also be a vehicle-mounted device, for example, it may be an on-board computer with a wireless communication function, or a wireless communication device externally connected to an on-board computer. Alternatively, the UE 11 may also be a roadside device, for example, it may be a streetlight, a signal light or other roadside device with wireless communication function.

The access device 12 may be a network-side device in the wireless communication system. The wireless communication system may be the 4th generation mobile communication (4G) system, also known as the Long Term Evolution (LTE) system; or the wireless communication system may also be a 5G system, also called new radio (NR) system or 5G NR system. Alternatively, the wireless communication system may also be a next-generation system of the 5G system. The access network in the 5G system may be called New Generation-Radio Access Network (NG-RAN). Or, it may be an MTC system.

The access device 12 may be an evolved access device (eNB) used in the 4G system. Alternatively, the access device 12 may also be an access device (gNB) using a centralized and distributed architecture in the 5G system. When the access device 12 adopts the centralized and distributed architecture, it usually includes a central unit (CU) and at least two distributed units (DUs). The central unit is provided with protocol stacks of the Packet Data Convergence Protocol (PDCP) layer, the Radio Link Control protocol (Radio Link Control, RLC) layer, and the Media Access Control (MAC) layer; and the distributed unit is provided with a protocol stack of physical (PHY) layer, and the embodiments of the present disclosure do not limit the specific implementation of the access device 12.

A wireless connection can be established between the access device 12 and the UE 11 through a wireless air interface. In different implementations, the wireless air interface is a wireless air interface based on the fourth generation mobile communication network technology (4G) standard; or the wireless air interface is a wireless air interface based on the fifth generation mobile communication network technology (5G) standard, for example, the wireless air interface is a new air interface; alternatively, the wireless air interface may also be a wireless air interface based on the next generation mobile communication network technology standard of 5G.

The R17 terminal power saving project introduces the characteristic of skipping PDCCH monitoring. The base station can instruct, in the downlink control information (DCI), the UE to skip monitoring the PDCCH in the next X slots. During this period, the terminal does not need to monitor the PDCCH and may be in a deep sleep state, thus saving power. Several optional values of X are configured by higher layer signaling. For example, the value of X may be 2.

The terminal may be configured with C-DRX. The terminal may be configured with a time domain pattern that periodically switches between the on state and the off state (on-off). Whenever the on duration is reached, the PDCCH monitoring is turned on. When the PDCCH monitoring ends or the off duration is reached, it can enter the sleep state, thus saving power.

For a low power wake up signal (LP-WUS), a host of the terminal may be in the sleep state and a low power receiver is turned on to specifically receive the WUS signal sent by the base station to determine whether the host needs to be turned on. Since the power of the low power receiver is very small, the effect of power saving of the terminal can be achieved.

The base station configures PDCCH skipping for the terminal. When the base station completes transmitting the data of the current radio frame (frame), it can instruct the terminal through DCI to skip PDCCH monitoring in the next X slots. After the end of the X slots (the slot is only one kind of time units of X, and in the specific implementation, it may also be a symbol or a micro-slot, etc.), the terminal will wake up and continue to monitor PDCCH.

However, due to the delay jitter of the XR service transmission and the limited candidate value of X, the UE may have to wait for a period of time to receive the data of the next radio frame after waking up. During the waiting period, the terminal always performs unnecessary PDCCH blind detection, thus wasting power consumption.

The base station configures the C-DRX transmission mode for the terminal. When the on duration is reached, the UE will wake up and monitor the PDCCH, but the XR service has not yet arrived at this time. After the UE wakes up, it may wait for a period of time to receive the data of the next radio frame. During the waiting period, the terminal always performs unnecessary PDCCH blind detection, thus wasting power consumption.

In view of this, as shown in FIG. 2, an embodiment of the present disclosure provides a terminal state switching method, which is performed by a terminal. The method includes the following steps.

In S1110: the terminal ending a first state is detected, and a LP-WUS is monitored.

The LP-WUS is used to wake up the terminal to enter a second state of monitoring a physical downlink control channel (PDCCH) and/or a physical downlink shared channel (PDSCH).

The terminal may be various types of terminals. Illustratively, the terminal may have two receivers, one receiver may receive PDCCH transmission and/or PDSCH transmission, and the other receiver may receive LP-WUS. The power consumption of the receiver receiving LP-WUS may be lower than the power consumption of receiving PDCCH transmission and/or PDSCH transmission.

For example, a receiver may receive LP-WUS, and may receive physical layer signals, but may not have high layer information processing capabilities (e.g., decoding capability). The receiver that receives PDCCH transmission and/or PDSCH transmission has the high layer information processing capabilities, and can receive high layer information and decode the information.

As another example, the terminal includes but is not limited to an XR terminal.

For XR terminals, energy consumption is an important indicator. XR terminals can provide XR services.

In one embodiment, the first state includes at least one of the following:
a state of skipping PDCCH monitoring;
an off state of connected-discontinuous monitoring (C-DRX).

The state of skipping PDCCH monitoring is a state in which the terminal does not monitor the PDCCH. In this way, the terminal will not consume power due to monitoring the PDCCH. The off state of C-DRX is: the terminal is in the off duration of C-DRX, and the terminal does not monitor PDCCH and/or PDSCH, either. Therefore, the terminal will not consume power due to monitoring PDCCH and/or PDSCH.

It can also be considered that the first state is a dormancy state with low power consumption.

If the terminal ends the first state, it may directly enter the state of monitoring PDCCH and/or PDSCH, and the state of monitoring PDCCH and/or PDSCH is a state with higher power consumption than the terminal in the first state.

The state of monitoring PDCCH and/or PDSCH here is the second state. In some embodiments, this second state may be considered as an active state. In short, the power consumption of the terminal in the second state is greater than the power consumption of the terminal in the first state.

For example, if the terminal is in the state of monitoring PDCCH and/or PDSCH, the terminal can quickly respond to the instruction from the network device and promptly send uplink transmissions and/or receive downlink transmissions. LP-WUS is a signal that the terminal can monitor with only extremely low power consumption. In the embodiments of the present disclosure, if the terminal is in the LP-WUS state, the power consumption of the terminal is lower than that of the terminal in the state of monitoring PDCCH and/or PDSCH.

For example, the power consumption of the terminal for monitoring LP-WUS may be lower than the power consumption of the terminal in the second state of monitoring PDCCH and/or PDSCH.

In the embodiments of the present disclosure, if it is detected that the terminal ends the first state, the terminal does not directly enter the high power consumption state of monitoring PDCCH and/or PDSCH, but enters the state of monitoring LP-WUS. In this way, if the network device side does not need to wake up the terminal to monitor PDCCH and/or PDSCH, or if the LP-WUS is not monitored by the terminal, the terminal will not enter the state of monitoring PDCCH and/or PDSCH, thereby saving power consumption of the terminal and prolonging the standby time of the terminal. Moreover, the terminal enters the LP-WUS state after ending the first state, the dormancy degree of the terminal is shallower compared to the first state. In this way, when information is exchanged between the network device and the terminal, the processor (for example, CPU or MCU), etc. of the terminal can be woken up in time and communicate with the network device, thus taking into account the communication efficiency.

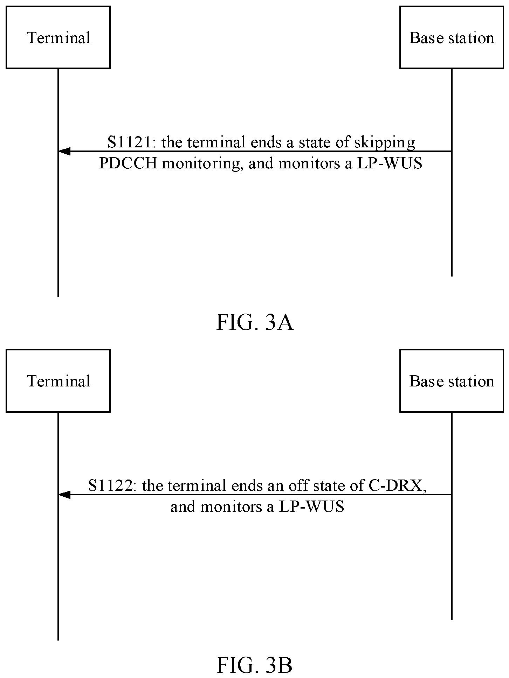

As shown in FIG. 3A, an embodiment of the present disclosure provides a terminal state switching method, which is performed by a terminal. The method includes the following steps.

In S1121: the terminal ends a state of skipping PDCCH monitoring, and monitors a LP-WUS.

The network device (e.g., base station) may configure a state of skipping PDCCH monitoring for the terminal. This specific state is one of the aforementioned first state.

For example, the network device may configure the state of skipping PDCCH monitoring for the terminal through high layer signaling of the base station. The high layer signaling includes but is not limited to: MAC layer signaling and/or RRC signaling.

As another example, the network device may indicate to the terminal a specific period of time to skip PDCCH monitoring through DCI. If the period of time to skip PDCCH monitoring indicated by the current DCI is expired, it is considered that the terminal ends the state of skipping PDCCH monitoring.

In some embodiments, detecting that the terminal ends the first state and monitoring the low power wake up signal (LP-WUS) includes:
detecting that the terminal ends the first state, and entering a third state;
monitoring the LP-WUS in the third state.

In the embodiments of the present disclosure, the third state may be a sleep state in which the terminal can monitor LP-WUS. The degree of sleep in this sleep state is relatively shallow. Therefore, when the terminal is in the state of monitoring LP-WUS, the terminal can be quickly awakened to perform downlink reception and/or downlink transmission.

For example, the third state may be: a micro sleep state or a light sleep state.

In the third state, the terminal may monitor LP-WUS.

As shown in FIG. 3B, an embodiment of the present disclosure provides a terminal state switching method, which is performed by the terminal. The method includes the following steps.

In S1122: the terminal ends an off state of a connected-discontinuous reception (C-DRX), and monitors a LP-WUS.

If the terminal is configured with discontinuous reception in the connected state, that is, the terminal is configured with C-DRX, the terminal may periodically switch between the off state and the on state according to the cycle of DRX. For example, one DRX cycle of the terminal includes: one on duration and one off duration. The terminal is in the on state during the on duration. The terminal is in the off state during the off duration.

If the terminal is configured with C-DRX, the terminal does not need to monitor the PDCCH and/or PDSCH when it is in the off state of the C-DRX, and the terminal needs to monitor the PDCCH and/or PDSCH when it is in the on state of the C-DRX.

If the terminal is about to exit (i.e. end) the off state of C-DRX, it means that the terminal needs to enter the on state with high power consumption, that is, at this time, it can be considered that the terminal is about to end the first state. Normally, if the terminal enters the on state, the power consumption of the terminal is higher than the state of monitoring LP-WUS, and the terminal does not monitor LP-WUS in the on state.

In some embodiments, detecting that the terminal ends the first state and monitoring the low power wake up signal (LP-WUS) includes:
detecting that the terminal ends the first state, and entering a third state;
monitoring the LP-WUS in the third state.

In the embodiments of the present disclosure, the third state may be a sleep state in which the terminal can monitor LP-WUS. The degree of sleep in this sleep state is relatively shallow. Therefore, when the terminal is in the state of monitoring LP-WUS, the terminal can be quickly awakened to perform downlink reception and/or downlink transmission.

For example, the third state may be: a micro sleep state or a light sleep state.

In the third state, the terminal may monitor the LP-WUS.

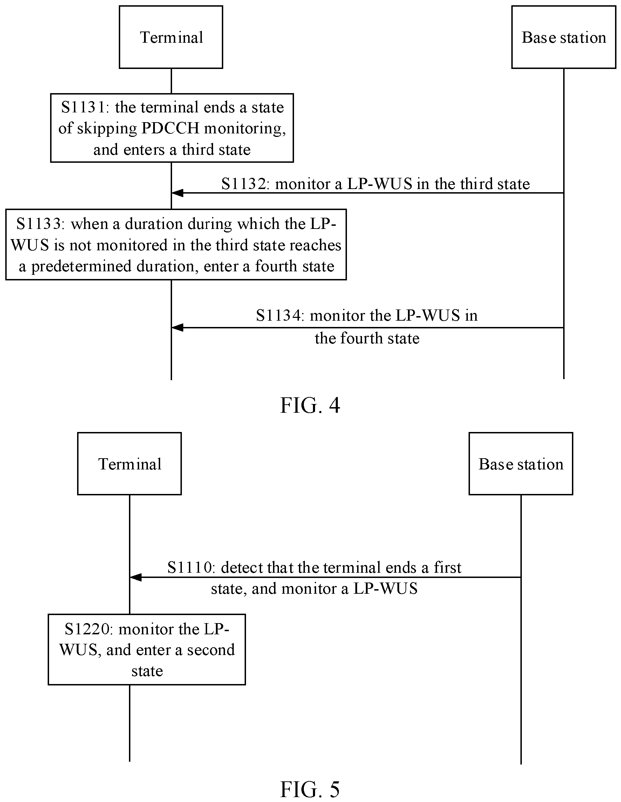

As shown in FIG. 4, an embodiment of the present disclosure provides a terminal state switching method, which is performed by the terminal. The method includes the following steps.

In S1131: the terminal ends a state of skipping PDCCH monitoring, and enters a third state.

In S1132: a LP-WUS is monitored in the third state.

In S1133: no LP-WUS is monitored in the third state for a duration reaching a duration threshold, and a fourth state is entered.

In S1134: the LP-WUS is monitored in the fourth state.

In the case that the original first state of the terminal is the state of skipping PDCCH monitoring, after the terminal enters the third state, and the duration during which LP-WUS is not monitored in the third state reaches the duration threshold, it means that the LP-WUS that the base station and other network devices need to wake up the terminal has not been continuously monitored by the terminal in the third state. In this time, the terminal may enter a deeper degree of sleep, but in order to be awakened, it will still continue to monitor LP-WUS.

For example, in a scenario where the first state of the terminal is a state of skipping the PDCCH, the aforementioned third state may be a micro sleep state, and the fourth state at this time may be a light sleep state or a deep sleep state. In this way, further switching of the terminal from the third state to the fourth state can further save the power consumption of the terminal.

The duration threshold may be: a preconfigured duration value, or a duration value agreed by a protocol.

For example, the duration threshold may be a duration value configured in a configuration of skipping PDCCH monitoring.

For example, the terminal determines that the PDCCH skipping period has expired according to the configuration of skipping PDCCH monitoring, and then it can determine that the terminal ends the first state.

The first state of the terminal is the off state of C-DRX, and it is detected that the terminal ends the first state, including at least one of the following:
it is detected that the terminal ends the off duration of C-DRX after a predetermined duration;
it is detected that the off duration of C-DRX of the terminal is ended.

For example, it is detected at the current moment that the end time at which the terminal ends the off duration of the C-DRX is reduced to be equal to the predetermined duration, then it is considered that the terminal is detected to end the first state.

For another example, the terminal is detected to end the off duration of C-DRX at the current moment.

In short, the above two methods can be considered as the situation where the terminal is about to end the first state.

In some embodiments, the method further includes:
continuing the situation that the LP-WUS is not monitored in the third state until the off duration of C-DRX is entered, and exiting monitoring of the LP-WUS.

For example, the third state here may be any sleep state, such as a micro sleep state or a light sleep state. The terminal performs monitoring on the LP-WUS in the sleep state, but the LP-WUS has not been monitored, which means that there is no service data from the network device arrives at the terminal or there is no downlink instructions need to be sent to the terminal to wake the terminal up. This state in which the LP-WUS has not been monitored continues until the off duration of C-DRX is entered again, and then the terminal exits monitoring of the LP-WUS.

In some embodiments, continuing the situation that the LP-WUS is not monitored in the third state until the off duration of C-DRX is entered and exiting the monitoring of the LP-WUS, includes:
continuing the situation that the LP-WUS is not monitored in the third state until the off duration of C-DRX is entered, entering and the off state of C-DRX.

For example, when the situation in which the LP-WUS is not monitored in the third state continues until the off duration of C-DRX is entered, the terminal enters the off state of C-DRX corresponding to the off duration of C-DRX. In the off state of C-DRX, the terminal does not monitor the PDCCH and/or PDSCH, thereby at least saving the power consumption of monitoring the PDCCH and/or PDSCH.

As shown in FIG. 5, an embodiment of the present disclosure provides a terminal state switching method, which is performed by the terminal. The method includes the following steps.

In S 1110: it is detected that the terminal ends a first state, and a LP-WUS is monitored.

In S1220: the LP-WUS is monitored, and a second state is entered.

If the LP-WUS is successfully monitored after the terminal ends the first state and enters the state of monitoring the LP-WUS, it enters the second state.

In the second state, the terminal may monitor the PDCCH and/or PDSCH, so that the terminal can monitor downlink signaling and/or downlink data sent by the network device.

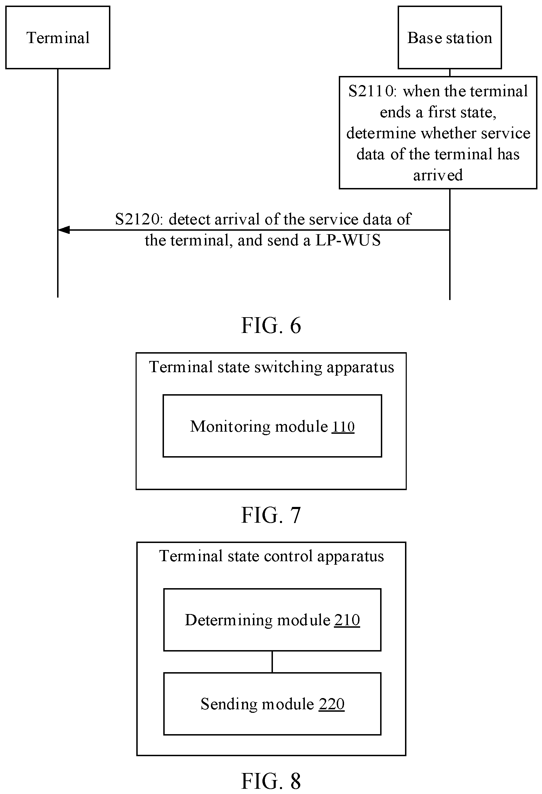

As shown in FIG. 6, an embodiment of the present disclosure provides a terminal state control method, which is performed by a base station. The method includes the following steps.
In S2110: when the terminal ends a first state, it is determined whether service data of the terminal has arrived.
In S2120: the service data of the terminal is detected to arrive, and a LP-WUS is sent.

The LP-WUS is used to wake up the terminal to enter a second state of monitoring a physical downlink control channel (PDCCH) and/or a physical downlink shared channel (PDSCH).

The service data is used to be sent to the terminal after the terminal enters the second state.

The terminal may be various types of terminals, including but not necessarily limited to the XR terminal.

After the terminal ends the first state, it is detected whether service data arrives at the terminal. If service data arrives, it means that the base station needs to communicate with the terminal. Therefore, the base station will monitor whether service data arrives. If it is detected that service data of the terminal arrives, it is equivalent to that there is service data that needs to be sent to the terminal.

If it is detected that there is service data that needs to be sent to the terminal, a LP-WUS is sent to wake up the terminal first. In other words, when the arrival of service data is monitored by the base station, it sends the LP-WUS first, so that the terminal enters the state of monitoring the downlink channel. The downlink state includes but is not limited to: the second state of monitoring PDCCH and/or PDSCH.

For example, when the arrival of service data of the terminal is monitored by the base station, it schedules the PDSCH through the PDCCH. In this way, the terminal monitors the service data on the corresponding PDSCH according to monitoring of the scheduling information arrived on the PDCCH.

In another example, when the arrival of the service data of the terminal is monitored, the base station directly sends the service data through grant-free scheduling PDSCH.

In some embodiments, determining to end the first state includes:
according to the high layer configuration and/or physical layer indication of the terminal skipping PDCCH monitoring, determining to end the state of the terminal skipping PDCCH monitoring. The high layer configuration may include: RRC signaling and/or configuration information carried by MAC CE. The physical layer indication may at least include: DCI.

In the last scheduling of normal scheduling data, through the downlink control information (DCI), the base station indicates the state of skipping the PDCCH, and may indicate skipping for a duration of X slots.

On the assumption that the base station indicates the state of skipping PDCCH monitoring and the skip duration X=20 in slot #n, the base station can determine that in slot (#n+20), the terminal will end the first state.

When the terminal exits from the state of skipping PDCCH monitoring, it enters the state of monitoring the LP-WUS, instead of directly entering the state of normally monitoring PDCCH.

In the state of monitoring LP-WUS, the UE receives the LP WUS signal using a low power receiver, and the host of the UE is in the micro sleep state.

When service arrives at the base station, the LP WUS signal is used to wake up the terminal. After receiving the LP WUS signal, the terminal immediately switches from the micro sleep state to the state of normally monitoring PDCCH and performs normal reception of PDCCH/PDSCH. In some embodiments, determining to end the first state includes:
according to a DRX configuration of the terminal, determining that the terminal ends the off duration of C-DRX.

The DRX configuration may be sent by the base station to the terminal. The terminal can determine when to enter the off duration of C-DRX and/or when to enter the on duration of C-DRX according to the DRX configuration.

Therefore, the base station can determine that the terminal ends the off duration of C-DRX according to the DRX configuration.

In some embodiments, determining that the terminal ends the off duration of the connected-discontinuous monitoring (C-DRX) according to the DRX configuration of the terminal includes at least one of the following:
determining that the terminal ends a state of the off duration of the C-DRX according to the connected-discontinuous reception (DRX) configuration of the terminal;
determining that the terminal ends the off duration of the C-DRX after a predetermined duration according to the connected-discontinuous reception (DRX) configuration of the terminal.

If the terminal determines to end the off duration of C-DRX after a predetermined duration, it is equivalent to that the terminal may enter the state of monitoring LP-WUS in advance.

When the terminal jumps out of the off state of C-DRX, it may enter the LP-WUS monitoring state instead of directly entering the on state like related protocols. In the LP-WUS monitoring state, the UE receives the LP WUS signal using a low power receiver, and the host of the UE is in the Micro sleep state.

When service arrives at the base station, the LP WUS signal is used to wake up the terminal. After receiving the LP WUS signal, the terminal immediately switches from the micro sleep state to the state of normally monitoring PDCCH and performs normal reception of PDCCH/PDSCH.

During the on duration, before receiving the LP WUS signal, the UE may remain the state of monitoring LP WUS in the micro sleep.

The above solution can reduce unnecessary PDCCH blind detection, thereby saving energy consumption of the terminal. At the same time, using the LP WUS to wake up the terminal in the Micro sleep state, the terminal can be woken up immediately and there is less impact on data transmission delay, ensuring data transmission delay performance.

There is another equivalent form of this solution for the situation of being configured with C-DRX.

Before T duration of the start time of the on duration, the UE switches to the micro sleep state. In this state, the UE may receive the LP WUS signals. When service arrives at the base station, the LP WUS signal is used to wake up the terminal. After receiving the LP WUS signal, the terminal immediately switches from the micro sleep state to the state of normally monitoring PDCCH and performs normal reception of PDCCH/PDSCH.

During the T duration and the on duration, before receiving the LP WUS signal, the UE will maintain the state of monitoring LP WUS in the micro sleep.

As shown in FIG. 7, an embodiment of the present disclosure provides a terminal state switching apparatus. The apparatus includes:
a monitoring module 110, configured to detect that a terminal ends a first state, and monitor a low power wake up signal (LP-WUS);
where the LP-WUS is used to wake up the terminal to enter a second state of monitoring a PDCCH and/or a PDSCH.

The terminal state switching apparatus further includes a storage module, which is connected to the monitoring module 110 and can be used to record whether the LP-WUS is monitored.

The terminal state switching apparatus provided by the embodiments of the present disclosure may be included in the terminal.

In some embodiments, the monitoring module 110 may be a program module. After the program module is executed by a processor, the above operations can be implemented.

In other embodiments, the monitoring module 110 may be a combination of soft and hard modules; the combination of soft and hard modules includes, but is not limited to: a programmable array; the programmable array includes, but is not limited to, a field programmable array and/or a complex programmable array.

In some embodiments, the monitoring module 110 may be a pure hardware module; the pure hardware module includes, but is not limited to: an application specific integrated circuit.

In some embodiments, the first state includes at least one of the following:
a state of skipping PDCCH monitoring;
an off state of connected-discontinuous monitoring (C-DRX).

In some embodiments, the monitoring module 110 is configured to detect that the terminal ends the first state, and enter a third state;
monitor the LP-WUS in the third state.

In some embodiments, the method apparatus further includes:
a first entry module, configured to, in a case that the first state is the state of skipping physical downlink control channel (PDCCH) monitoring, monitor no LP-WUS in the third state for a duration reaching a duration threshold, and enter a fourth state;
the monitoring module 110 is further configured to monitor the LP-WUS in the fourth state.

In some embodiments, the apparatus further includes:
a detection module, configured to perform at least one of the following:
detecting that the terminal ends an off duration of C-DRX after a predetermined duration;
detecting that the off duration of C-DRX of the terminal is ended.

In some embodiments, the apparatus further includes:
an exit module, configured to continue a situation where the LP-WUS is not monitored in the third state until the off duration of C-DRX is entered, and exit monitoring of the LP-WUS.

In some embodiments, the exit module is configured to continue the situation where the LP-WUS is not monitored in the third state until entering the off duration of C-DRX, and enter the off state of C-DRX.

In some embodiments, the apparatus further includes:
a second entry module, configured to monitor the LP-WUS, and enter the second state.

As shown in FIG. 8, an embodiment of the present disclosure provides a terminal state control apparatus, which is performed by a base station. The apparatus includes:
a determining module 210, configured to determine whether service data of a terminal has arrived when the terminal ends a first state;
a sending module 220, configured to detect arrival of the service data of the terminal, and send a low power wake up signal (LP-WUS);
where the LP-WUS is used to wake up the terminal to enter a second state of monitoring a physical downlink control channel (PDCCH) and/or a physical downlink shared channel (PDSCH);
the service data is used to be sent to the terminal after the terminal enters the second state.

In some embodiments, the terminal state control apparatus may be included in the network device such as the base station, and through the transmission of the LP-WUS, the terminal that has ended the first state may be triggered to enter the second state of monitoring PDCCH and/or PDSCH.

In some embodiments, the determining module 210 is configured to determine that the terminal exits a state of skipping PDCCH monitoring according to a configuration of the terminal skipping PDCCH monitoring.

In some embodiments, the determining module 210 is further configured to determine that the terminal exits an off duration of a connected-discontinuous monitoring (C-DRX) according to a connected-discontinuous reception (DRX) configuration of the terminal.

In some embodiments, the determining module 210 is configured to perform at least one of the following:
determining that the terminal exits a state of the off duration of C-DRX according to the connected-discontinuous reception (DRX) configuration of the terminal;
determining that the terminal exits the off duration of C-DRX after a predetermined duration according to the connected-discontinuous reception (DRX) configuration of the terminal.

An embodiment of the present disclosure provides a communication device, including:
a memory configured to store instructions executable by a processor(s);
the processor(s), connected to the memory respectively;
where the processor(s) is configured to execute the policy processing method provided by any of the foregoing technical solutions.

The processor may include various types of storage media, which are non-transitory computer storage media that can continue to store information stored thereon after the communication device is powered off.

Here, the communication device includes: a UE or a network element, and the network element may be any one of the aforementioned first access management network element to the fourth network element.

The processor may be connected to the memory through a bus, etc., and is configured to read the executable program stored in the memory, for example, at least one of the methods shown in FIG. 2, FIG. 3A, FIG. 3B, FIG. 4 to FIG. 6.

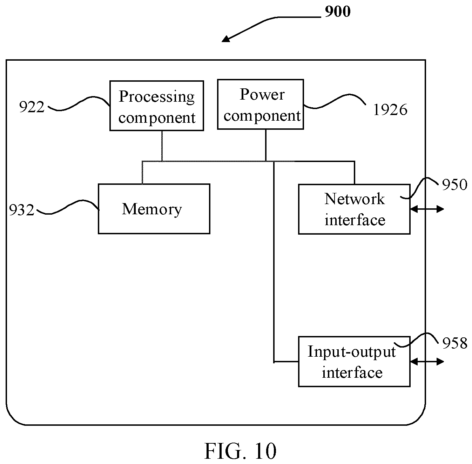

FIG. 10 is a block diagram of a terminal 800 according to an exemplary embodiment. For example, the terminal 800 may be a mobile phone, a computer, a digital broadcast user device, a messaging device, a game console, a tablet, a medical device, exercise equipment, a personal digital assistant, and the like.

Referring to FIG. 10, the terminal 800 may include one or more of the following components: a processing component 802, a memory 804, a power component 806, a multimedia component 808, an audio component 810, an input/output (I/O) interface 812, a sensor component 814, and communications component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operations of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EEPROM), a programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the device 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor assembly 814 may include a proximity sensor configured to detect the presence of nearby objects without any physical contact. The sensor assembly 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communications component 816 further includes a near field communications (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a random access memory (RAM), a CD-ROM, a magnetic tape, a floppy disc, an optical data storage device, and the like.

As shown in FIG. 10, an embodiment of the present disclosure illustrates a structure of an access device. For example, the communication device 900 may be provided as a network side device. The communication device may be various network elements, such as the above-mentioned access network elements and/or network functions.

Referring to FIG. 10, the communication device 900 includes a processing component 922, which further includes one or more processors, and a memory resource represented by a memory 932 for storing instructions executable by the processing component 922, such as an application program. The application program stored in the memory 932 may include one or more modules, each corresponding to a set of instructions. In addition, the processing component 922 is configured to execute instructions to perform any of the above-mentioned methods applied to the access device, for example, the methods shown in any one of FIG. 2, FIG. 3A, FIG. 3B, and FIG. 4 to FIG. 6.

The communication device 900 may further include a power component 926 configured to perform power management of the communication device 900, a wired or wireless network interface 950 configured to connect communication device 900 to a network, and an input-output (I/O) interface 958. The communication device 900 may operate based on an operating system stored in the memory 932, such as Windows Server^{™}, Mac OS X^{™}, Unix^{™}, Linux^{™}, FreeBSD^{™} or the like.

Other embodiments of the present disclosure will be apparent to those skilled in the art from consideration of the specification and practice of the contents disclosed here. The present disclosure is intended to cover any variations, uses, or adaptations of the present disclosure, which follows the general principles thereof and includes the common knowledge or habitual technical means in this technical field that is not disclosed in the present disclosure. The specification and the embodiments are considered as exemplary only, with a true scope and spirit of the present disclosure being indicated by the appending claims.

It will be appreciated that the present disclosure is not limited to the exact construction that has been described above and illustrated in the accompanying drawings, and various modifications and changes can be made without departing from the scope thereof. The scope of the present disclosure is only limited by the appended claims.

## Claims

1. A terminal state switching method, performed by a terminal, wherein the method comprises:
detecting that the terminal ends a first state, and monitoring a low power wake up signal (LP-WUS);
wherein the LP-WUS is used to wake up the terminal to enter a second state of monitoring a physical downlink control channel (PDCCH) and/or a physical downlink shared channel (PDSCH).

2. The method according to claim 1, wherein the first state comprises at least one of:
a state of skipping physical downlink control channel (PDCCH) monitoring;
an off state of connected-discontinuous monitoring (C-DRX).

3. The method according to claim 2, wherein detecting that the terminal ends the first state, and monitoring the low power wake up signal (LP-WUS), comprises:
detecting that the terminal ends the first state, and entering a third state; and
monitoring the LP-WUS in the third state.

4. The method according to claim 3, further comprising:
for a situation where the first state is the state of skipping the physical downlink control channel (PDCCH) monitoring, monitoring no LP-WUS in the third state for a duration reaching a duration threshold, and entering a fourth state; and
monitoring the LP-WUS in the fourth state.

5. The method according to claim 2, wherein detecting that the terminal ends the first state comprises at least one of:
detecting that the terminal ends an off duration of the C-DRX after a predetermined duration;
detecting that the off duration of the C-DRX of the terminal is ended.

6. The method according to claim 5, further comprising:
continuing a situation where the LP-WUS is not monitored in the third state until the off duration of the C-DRX is entered, and exiting monitoring of the LP-WUS.

7. The method according to claim 6, wherein continuing the situation where the LP-WUS is not monitored in the third state until the off duration of the C-DRX is entered, and exiting monitoring of the LP-WUS, comprises:
continuing the situation where the LP-WUS is not monitored in the third state until the off duration of the C-DRX is entered, and entering the off state of the C-DRX.

8. The method according to any one of claims 1 to 7, further comprising:
monitoring the LP-WUS, and entering the second state.

9. A terminal state control method, performed by a base station, wherein the method comprises:
in response to that a terminal ends a first state, determining whether service data of the terminal has arrived; and
detecting arrival of the service data of the terminal, and sending a low power wake up signal (LP-WUS);
wherein the LP-WUS is used to wake up the terminal to enter a second state of monitoring a physical downlink control channel (PDCCH) and/or a physical downlink shared channel (PDSCH); and
the service data is used to be sent to the terminal after the terminal enters the second state.

10. The method according to claim 9, wherein determining that the first state is ended comprises:
according to a configuration of the terminal skipping physical downlink control channel (PDCCH) monitoring, determining that the terminal ends a state of skipping PDCCH monitoring.

11. The method according to claim 9, wherein determining that the first state is ended comprises:
according to a connected-discontinuous reception (DRX) configuration of the terminal, determining that the terminal ends an off duration of the C-DRX.

12. The method according to claim 11, wherein determining that the terminal ends the off duration of the C-DRX according to the connected-discontinuous reception (DRX) configuration of the terminal, comprises at least one of:
determining that the terminal ends a state of the off duration of the C-DRX according to the connected-discontinuous reception (DRX) configuration of the terminal;
determining that the terminal ends the off duration of the C-DRX after a predetermined duration according to the connected-discontinuous reception (DRX) configuration of the terminal.

13. A terminal state switching apparatus, comprising:
a monitoring module, configured to detect that a terminal ends a first state, and monitor a low power wake up signal (LP-WUS);
wherein the LP-WUS is used to wake up the terminal to enter a second state of monitoring a physical downlink control channel (PDCCH) and/or a physical downlink shared channel (PDSCH).

14. The apparatus according to claim 13, wherein the first state comprises at least one of:
a state of skipping physical downlink control channel (PDCCH) monitoring;
an off state of connected-discontinuous monitoring (C-DRX).

15. The apparatus according to claim 14, wherein the monitoring module is configured to:
detect that the terminal ends the first state, and enter a third state; and
monitor the LP-WUS in the third state.

16. The apparatus according to claim 15, further comprising:
a first entry module, configured to, for a situation where the first state is the state of skipping the physical downlink control channel (PDCCH) monitoring, monitor no LP-WUS in the third state for a duration reaching a predetermined duration, and enter a fourth state;
wherein the monitoring module is further configured to monitor the LP-WUS in the fourth state.

17. The apparatus according to claim 14, further comprising:
a detection module, configured to perform at least one of:
detecting that the terminal ends an off duration of the C-DRX after a predetermined duration;
detecting that the off duration of the C-DRX of the terminal is ended.

18. The apparatus according to claim 17, further comprising:
an exit module, configured to continue a situation where the LP-WUS is not monitored in the third state until the off duration of the C-DRX is entered, and exit monitoring of the LP-WUS.

19. The apparatus according to claim 18, wherein the exit module is configured to continue the situation where the LP-WUS is not monitored in the third state until the off duration of the C-DRX is entered, and enter the off state of the C-DRX.

20. The apparatus according to any one of claims 13 to 19, further comprising:
a second entry module, configured to monitor the LP-WUS, and enter the second state.

21. A terminal state control apparatus, performed by a base station, wherein the apparatus comprises:
a determining module, configured to, in response to that a terminal ends a first state, determine whether service data of the terminal has arrived; and
a sending module, configured to detect arrival of the service data of the terminal, and send a low power wake up signal (LP-WUS);
wherein the LP-WUS is used to wake up the terminal to enter a second state of monitoring a physical downlink control channel (PDCCH) and/or a physical downlink shared channel (PDSCH); and
the service data is used to be sent to the terminal after the terminal enters the second state.

22. The apparatus according to claim 21, wherein the determining module is configured to determine that the terminal exits a state of skipping PDCCH monitoring according to a configuration of the terminal skipping PDCCH monitoring.

23. The apparatus according to claim 21, wherein the determining module is further configured to determine that the terminal exits an off duration of a connected-discontinuous monitoring (C-DRX) according to a connected-discontinuous reception (DRX) configuration of the terminal.

24. The apparatus according to claim 23, wherein the determining module is configured to perform at least one of:
determining that the terminal exits a state of the off duration of the C-DRX according to the connected-discontinuous reception (DRX) configuration of the terminal;
determining that the terminal exits the off duration of the C-DRX after a predetermined duration according to the connected-discontinuous reception (DRX) configuration of the terminal.

25. A communication device, comprising a processor, a transceiver, a memory, and an executable program stored in the memory and capable of being run by the processor, wherein when the processor runs the executable program, the method according to any one of claims 1 to 8 or 9 to 12 is executed.

26. A computer storage medium storing an executable program; wherein after the executable program is executed by a processor, the method according to any one of claims 1 to 8 or 9 to 12 can be implemented.
